# EUROPEAN PATENT SPECIFICATION

(11) **EP 3 633 684 B1**
(45) Date of publication and mention of the grant of the patent: **21.02.2024**
(21) Application number: 17911945.8
(22) Date of filing: 15.12.2017
(51) Int. Cl.: C01G 43/00, C01G 43/025, G21C 3/62, C01G 43/06, G21C 21/02

(54) **TREATMENT METHOD AND TREATMENT APPARATUS FOR URANIUM HEXAFLUORIDE RESIDUE WITHIN CYLINDER, USING GAS PHASE REACTION**
VERFAHREN UND VORRICHTUNG ZUR BEHANDLUNG VON URANHEXAFLUORID-RÜCKSTÄNDEN IN EINEM ZYLINDER UNTER VERWENDUNG EINER GASPHASENREAKTION
PROCÉDÉ DE TRAITEMENT ET APPAREIL DE TRAITEMENT POUR RÉSIDU D'HEXAFLUORURE D'URANIUM DANS UN CYLINDRE, AU MOYEN D'UNE RÉACTION EN PHASE GAZEUSE

(30) Priority: 01.06.2017 KR 20170068544
(43) Date of publication of application: 08.04.2020
(73) Proprietor: Kepco Nuclear Fuel Co., Ltd., Daejeon 34057 (KR)
(72) Inventor: BAE, Youngmoon, Daejeon 34075 (KR); MOON, Yudon, Daejeon 34053 (KR); HWANG, In-Kyu, Daejeon 34053 (KR); SHIN, Hyundong, Daejeon 34020 (KR); YANG, Seungchul, Daejeon 34112 (KR); KWAK, Dongyong, Daejeon 34130 (KR); LEE, Byungkook, Sejong 30098 (KR); CHO, Hyunkwang, Daejeon 34130 (KR); LEE, Junho, Daejeon 34130 (KR)
(74) Representative: Brantsandpatents bv
(86) International application number: PCT/KR2017/014802
(87) International publication number: WO 2018/221811

(56) References cited:
- JP-A- H1 053 419
- JP-A- H1 053 419
- JP-A- 2006 105 846
- JP-A- 2008 116 245
- KR-A- 20090 112 862
- KR-B1- 101 648 973
- US-A- 6 136 285
- US-A1- 2003 064 519
- Theses ET AL: "University of South Carolina Scholar Commons Modified Sodium Diuranate Process For the Recovery of Uranium From Uranium Hexafluoride Transport Cylinder Wash Solution", , 1 January 2013 (2013-01-01), XP055147653, Retrieved from the Internet: URL:http://scholarcommons.sc.edu/cgi/viewc ontent.cgi?article=3549&context=etd&sei-re dir=1&referer=http://scholar.google.de/sch olar?hl=en&q=%22uranium+hexafluoride%22+%2 2uranyl+peroxide%22&btnG=&as_sdt=1%2C5&as_ sdtp=#search= [retrieved on 2014-10-20]

## Description

### Technical Field

The present invention relates to a treatment method and a treatment apparatus for residues (hereinafter referred to as "UF₆ heel") remaining inside a cylinder after vaporization of uranium hexafluoride (hereinafter referred to as "UF₆") and, more particularly, to a treatment method and a treatment apparatus for the UF₆ heel that manufacture solid uranyl fluoride (hereinafter referred to as "UO₂F₂"), which is an intermediate of uranium dioxide (hereinafter referred to as "UO₂") powder manufacture, using a gas phase reaction and supply the UO₂F₂ to a reconversion process through a separate treatment apparatus for the UF₆ heel, separated from the vaporization process of the reconversion process.

### Background Art

US 6136285 teaches a conventional reconversion process.

When manufacturing nuclear fuel for light water reactors, UF₆ is first manufactured as a solid phase UO₂ powder through a reconversion process, and then processed into a pressed green pellet through a homogeneous mixing and powder preparation process. The pressed green pellet is sintered and ground to complete a UO₂ sintered body. The UO₂ sintered body is charged into a fuel rod and completed as a nuclear fuel assembly through end cap welding, skeletal assembly, lacquer coating, assembly fabrication, and helium leak testing. In the reconversion process, which is a core process at this time, the recovery of uranium through UF₆ heel treatment after UF₆ vaporization is essential. This is because the UF₆ heel treatment is a method of reducing an amount of radioactive waste, which is expensive to process, and is a desirable process to increase a uranium recovery rate and enhance economic efficiency of a nuclear fuel manufacturing process.

The UF₆, which is a raw material for the nuclear fuel of the light water reactors, exists in a solid phase at room temperature, and, as vapor pressure thereof is low, is difficult to be supplied to the reactor by a desired amount. The UF₆ has a triple point of 64.4°C at about 1.5 barg and vaporizes easily at temperatures no less than the triple point. Therefore, in order to supply the UF₆ into UO₂ conversion furnace in a reconversion process, the UF₆ is to be heated to no less than the triple point. In a conventional reconversion process, temperature of a vaporizer is maintained at about 100°C and equilibrium state of gas and liquid is made. Then only a gas phase UF₆ is separated and used.

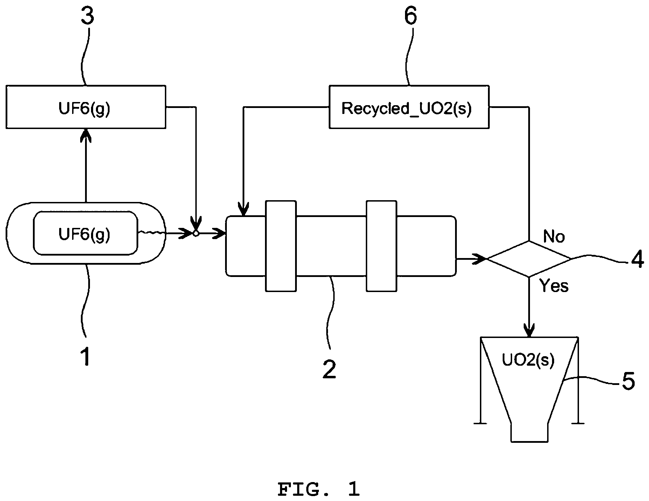

As shown in FIG. 1, a cold trap is used in a conventional reconversion process. In the vaporizer, when the process pressure is lowered as most of the UF₆ inside the cylinder is extracted, and a supply flow rate of UF₆ falls equal to or below a predetermined limit, the UF₆ heel is extracted by switching to the cold trap facility. In addition, when the UF₆ heel of about 10 cylinders is recovered and the UF₆ inside the cold trap reaches an amount at least equal to a predetermined limit, work is performed in the same manner as in the vaporization process, and the gas phase UF₆ is supplied to the UO₂ conversion furnace in the reconversion process.

However, the UF₆ heel treatment using the conventional cold trap accompanies undesirable UO₂ powder quality evaluation and a step of UO₂ powder recycling, due to unstable process pressure and the like, whereby productivity is lowered. In addition, extraction efficiency of the UF₆ heel is also not good, whereby a large amount of radioactive waste is generated. This is because the UF₆ heel, which is not extracted even by a cold trap, is precipitated and stored as sodium biuranate scrap and the like through a separate UF₆ cylinder cleaning process.

Even overseas, the UF₆ heel treatment using the cold trap has been changing to a method using a vacuum pump for extraction of the UF₆ heel due to the above-mentioned problems and safety problems. Therefore, there is a need for a method and a preferred treatment apparatus for the UF₆ heel, which not only improve the quality of UO₂ powder by efficiently operating the reconversion process, which is a key process for the manufacture of nuclear fuel for the light water reactors but also recover the uranium inside the UF₆ cylinder to the maximum, thereby minimizing the UF₆ heel to less than 0.5 kg.

### Disclosure

### Technical Problem

Accordingly, the present invention has been made keeping in mind the above problems occurring in the related art, and an objective of the present invention is to provide a treatment method and a treatment apparatus preferable for uranium that can improve quality of UO₂ powder by stably and efficiently operating a reconversion process, which is a core process in the manufacture of nuclear fuel for a light water reactor, and can minimize an amount of a UF₆ heel to be less than 0.5 kg, thereby reducing a generation amount of radioactive waste being expensive to process.

### Technical Solution

In order to achieve the above objective according to one aspect of the present invention, there is provided a treatment method for a UF₆ heel, the treatment method including: (1) vaporizing the UF₆ heel; (2) manufacturing solid phase UO₂F₂ using UF₆ gas vaporized at step 1; (3) separating the solid phase UO₂F₂ and by-product gas from each other; and (4) separating hydrogen fluoride from the by-product gas.

The vaporizing the UF₆ heel at step 1 preferably comprises supplying an inert gas to vaporize the UF₆ and raise temperature to no less than a triple point of the UF₆.

The separating hydrogen fluoride from the by-product gas at step 4 preferably comprises separating aqueous solution of hydrogen fluoride at a lower portion of a liquid/gas separator.

According to one embodiment of the present invention, there is provided a treatment apparatus for the UF₆ heel, the treatment apparatus including: a vaporizer for vaporizing the UF₆ heel; a reactor producing solid phase UO₂F₂ using UF₆ gas produced in the vaporizer by being connected with the vaporizer; a solid/gas separator separating the solid phase UO₂F₂ produced in the reactor from by-product gas by being connected with the reactor; a heat exchanger allowing the by-product gas supplied from the solid/gas separator to be passed and liquefying a portion of the gas by being connected with the solid/gas separator; and a liquid/gas separator separating liquid and gas, produced passing through the heater, from each other and a fan is provided by being connected to a side above the liquid/gas separator and configured to discharge at least a portion of the gas produced inside the liquid/gas separator.

At least one gas phase distributor is preferably provided at the inside of the reactor for uniformly supplying the gas.

In order to manufacture the solid phase UO₂F₂ in the reactor, at least one of an inert gas and superheated steam is preferably supplied.

Flow velocity inside the reactor is preferably controlled to be higher than minimum fluidization velocity of UO₂F₂ powder.

Flow velocity inside the solid/gas separator is preferably controlled to be lower than minimum fluidization velocity of UO₂F₂ powder.

### Advantageous Effects

According to the present invention as described above, the solid phase UO₂F₂, an intermediate of UO₂ powder, is manufactured with a separate process for the UF₆ heel treatment, thereby improving the quality of UO₂ powder and stability of the manufacturing process, and the UF₆ heel inside the UF₆ cylinder is minimized to be less than 0.5 kg, thereby reducing a generation amount of radioactive waste being expensive to process. Accordingly, preferable effects can be realized.

### Description of Drawings

FIG. 1 shows a treatment method for a UF₆ heel using a conventional cold trap;

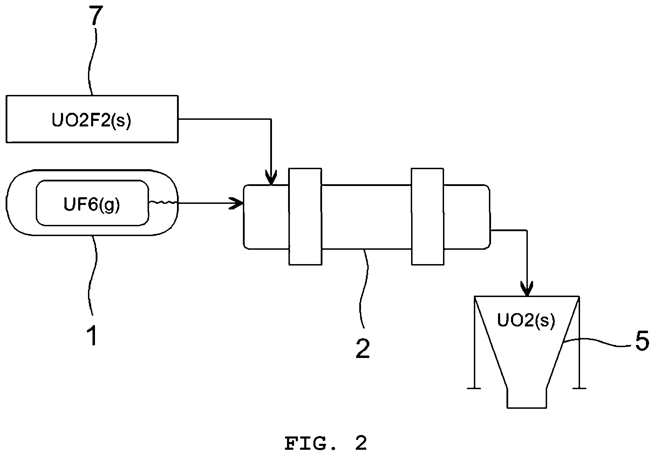

FIG. 2 shows a reconversion process of the present invention;
FIG. 3 shows a method and a treatment apparatus for the UF₆ heel of the present invention; and
FIG. 4 shows a UO₂F₂ reactor of the present invention.

### Best Mode

Hereinbelow, exemplary embodiments of the present invention will be described in detail.

There is provided a treatment method for a UF₆ heel according to an embodiment of the present invention, the method including: (1) vaporizing the UF₆ heel; (2) manufacturing solid phase UO₂F₂ using UF₆ gas vaporized at step 1; (3) separating the solid phase UO₂F₂ and by-product gas from each other; and (4) separating hydrogen fluoride from the by-product gas above.

First, after vaporization of the UF₆ inside a cylinder, to extract the UF₆ heel, the temperature is preferably raised to no less than a triple point of the UF₆ or, in some cases, pressure is preferably boosted by supplying an inert gas. Here, the inert gas includes, but is not limited to, nitrogen gas. In addition, extraction of the UF₆ heel is preferably repeated according to an operation method for process of the UF₆ heel treatment.

In a process of supplying the UF₆ gas obtained by the above method to the reactor 72 manufacturing the UO₂F₂, depending on an amount of the UF₆ gas, the inert gas and superheated steam are supplied at an appropriate ratio. Thus, the solid phase UO₂F₂ is preferably obtained using the gases supplied together as raw material according to reaction formula 1 below. Some of the solid phase UO₂F₂ manufactured at this time may be discharged to a side below the reactor 72.

<Reaction formula 1> UF₆(g) + (2+x)H₂O(g) + N₂(g) → UO₂F₂(s) + 4HF(g) + xH₂O(g) + N₂(g)

The solid phase UO₂F₂ and the by-product gas, obtained from the UO₂F₂ reactor 72, are supplied to the solid/gas separator 73 so as to be separated from each other. Most of the solid phase UO₂F₂ is discharged to a side below the solid/gas separator 73, and the discharged UO₂F₂ is supplied to the UO₂ conversion furnace 2 together with some of the solid phase UO₂F₂ having been manufactured in and discharged from the UO₂F₂ reactor 72.

While passing through a heat exchanger 741, a portion of the by-product gas separated from the solid/gas separator 73 is preferably condensed. Then the separated by-product gas is supplied to the liquid/gas separator 74, whereby gas, mostly nitrogen gas, in an upper portion is preferably discharged by a fan 742, and the aqueous solution of hydrogen fluoride separated in a lower portion may be transferred by a pump 743.

A treatment apparatus for the UF₆ heel may include a vaporizer 71 used only for the UF₆ heel for vaporizing the UF₆ heel, a reactor 72 connected to the vaporizer 71 so as to manufacture the solid phase UO₂F₂ by using the UF₆ gas generated at the vaporizer 71, a solid/gas separator 73 connected to the reactor 72 so as to separate the solid phase UO₂F₂, which is manufactured in the reactor 72, from by-product gas, a heat exchanger 741 connected to the solid/gas separator 73 so as to allow the by-product gas, which is supplied from the solid/gas separator 73, to pass therethrough and be condensed into liquid, and a liquid/gas separator 74 configured to separate the hydrogen fluoride liquid, which is condensed at the heat exchanger 741, from the gas.

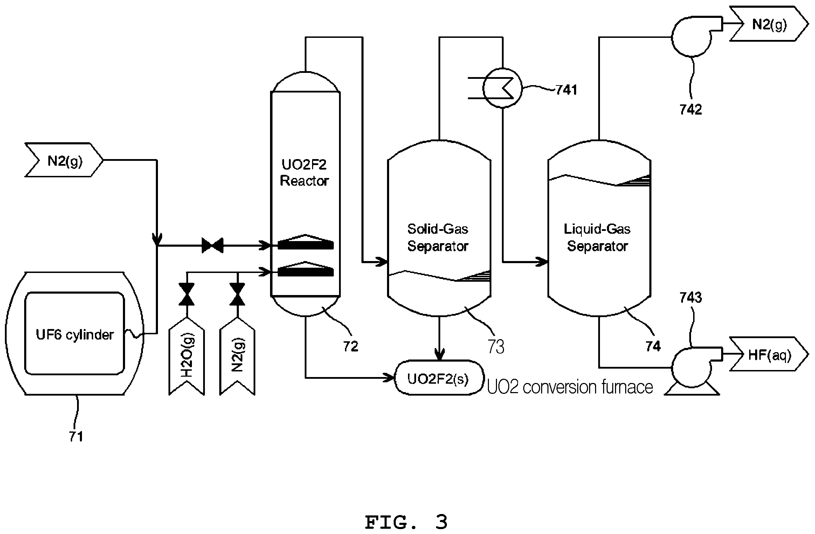

As shown in FIG. 3, in the treatment apparatus for the UF₆ heel, which is independent of the reconversion process, the pressure inside the UF₆ cylinder may be boosted by supplying the inert gas to the inside of the UF₆ cylinder according to the above-mentioned treatment method by using the vaporizer 71 used only for the UF₆ heel. Alternatively, a separate device is preferably provided to vaporize the UF₆ heel by raising the temperature of the UF₆ heel to no less than the triple point.

The UF₆ gas generated in the vaporizer 71 used only for the UF₆ heel is supplied, together with the superheated steam and the inert gas containing a desired ratio of nitrogen, to the UO₂F₂ reactor 72 that manufactures the solid phase UO₂F₂. In this case, the UO₂F₂ reactor 72 preferably includes a measuring instrument 721 and control valves 722A, 722B, and 722C as necessary, and a supply amount of the UF₆ gas may be adjusted by the provided measuring instrument 721 and control valve 722A. In addition, the superheated steam is controlled by the superheated steam control valve 722B, and the nitrogen gas is controlled by the nitrogen gas control valve 722C.

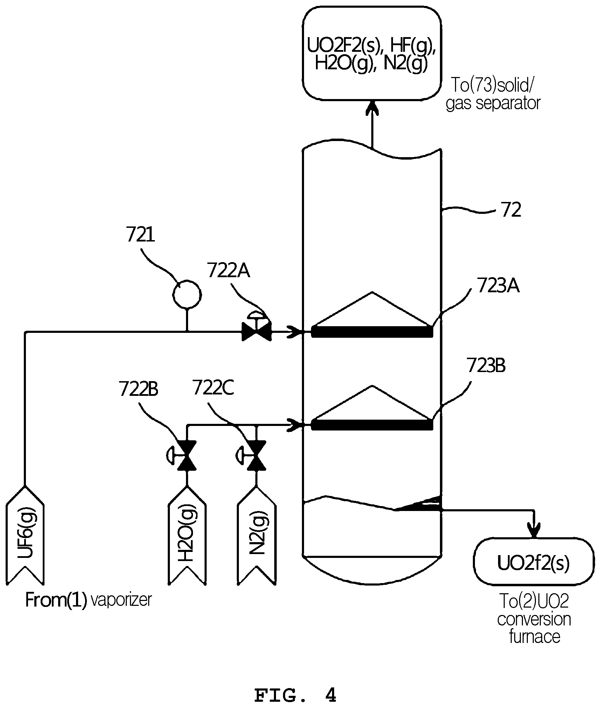

In the UO₂F₂ reactor 72, shown in detail in FIG. 4, by a gas phase distributor 723A of the UF₆ gas for uniformly supplying the UF₆ gas and a distributor 723B of the nitrogen gas or the superheated vapor, the solid phase UO₂F₂ is manufactured according to reaction formula 1. Some of the resulting solid phase UO₂F₂ is preferably discharged to a side below the UO₂F₂ reactor 72, but flow velocity inside the UO₂F₂ reactor 72 is preferably controlled to be higher than minimum fluidization velocity of the UO₂F₂ powder in order to allow the solid phase UO₂F₂ to be discharged to a side above the UO₂F₂ reactor 72.

The solid phase UO₂F₂ and by-product gas discharged from the upper portion of the UO₂F₂ reactor 72 are supplied to the solid/gas separator 73 so as to be respectively separated from each other. Here, most of the solid phase UO₂F₂ is discharged to the side below the solid/gas separator 73. In order to facilitate the solid phase UO₂F₂ to be discharged as above, flow velocity inside the solid/gas separator 73 is controlled to be lower than the minimum fluidization velocity of the UO₂F₂ powder. The solid phase UO₂F₂ thus separated is supplied to the UO₂ conversion furnace 2 together with the solid phase UO₂F₂ discharged from the side below the previous UO₂F₂ reactor 72. In this case, a shape of the solid/gas separator 73 is not limited, and apparatus conditions are to be set so that the by-product gas does not condense inside the solid/gas separator 73.

The liquid/gas separator 74 preferably includes a heat exchanger 741 at a front end, a fan 742 at a rear end thereabove, and a pump 743 at a rear end therebelow, wherein the by-product gas discharged from the solid/gas separator 73 preferably passes through the heat exchanger 741 and condense into an aqueous solution of low concentration hydrogen fluoride. Then condensed aqueous solution and the by-product gas are supplied to the liquid/gas separator 74 so as to be separated from each other. Subsequently, the aqueous solution of low concentration hydrogen fluoride is preferably separated at the lower portion of the liquid/gas separator 74, and the aqueous solution of low concentration hydrogen fluoride thus separated is processed by the pump 743 connected to the liquid/gas separator 74. The by-product gas from which hydrogen fluoride has been removed is preferably composed of mostly nitrogen gas and is discharged by the fan 742 connected to the side above the liquid/gas separator 74. The fan 742 connected to the side above the liquid/gas separator 74 preferably contributes to play a role in maintaining most of the process of the present invention at an appropriate negative pressure and preventing the radioactive material from leaking to the outside.

The present invention described above is not limited to the above-described embodiment and the accompanying drawings, and those skilled in the art will appreciate that the scope of the invention is as disclosed in the accompanying claims.

### <Description of the Reference Numerals in the Drawings>

1: vaporizer 2: UO₂ conversion furnace
3: cold trap 4: UO₂ quality assessment
5: UO₂ container 6: UO₂ powder recycle
71: vaporizer used only for UF₆ heel 72: UO₂F₂ reactor
721: instrument
722A: UF₆ control valve 722B: superheated steam control valve
722C: nitrogen gas control valve
723A: UF₆ gas phase distributor
723B: nitrogen gas or the superheated vapor distributor
73: solid/gas separator
74: liquid/gas separator
741: heat exchanger 742: fan
743: pump

## Claims

1. A treatment method for a UF₆ heel, the treatment method comprising:
(1) vaporizing the UF₆ heel;
(2) manufacturing solid phase UO₂F₂ using UF₆ gas vaporized at step (1);
(3) separating the solid phase UO₂F₂ and by-product gas from each other; and
(4) separating hydrogen fluoride from the by-product gas at step (4).

2. The treatment method of claim 1, wherein the vaporizing the UF₆ heel at step (1) further comprises supplying an inert gas to vaporize the UF₆ and raises the temperature to no less than a triple point of the UF₆.

3. The treatment method of claim 1, wherein the separating hydrogen fluoride from the by-product gas at step (4) further comprises separating aqueous solution of hydrogen fluoride at a lower portion of a liquid/gas separator (74).

4. A treatment apparatus for a UF₆ heel, the treatment apparatus comprising:
a vaporizer (71) for vaporizing the UF₆ heel;
a reactor (72) connected to the vaporizer so as to manufacture the solid phase UO₂F₂ by using the UF₆ gas generated at the vaporizer;
a solid/gas separator (73) connected to the reactor so as to separate the solid phase UO₂F₂, manufactured in the reactor, from by-product gas;
a heat exchanger (741) connected to the solid/gas separator so as to allow the by-product gas, supplied from the solid/gas separator, to pass therethrough and be condensed into liquid; and
a liquid/gas separator (74) configured to separate the hydrogen fluoride liquid condensed at the heat exchanger, from the gas,
further comprising a fan (742) provided by being connected to a side above the liquid/gas separator and configured to discharge at least a portion of the gas generated inside the liquid/gas separator.

5. The treatment apparatus of claim 4, further comprising at least one gas phase distributor (723A, 723B) provided at the inside of the reactor for uniformly supplying the gas

6. The treatment apparatus of claim 4, wherein, at least one of an inert gas and superheated steam is supplied in order to manufacture the solid phase UO₂F₂ in the reactor.

7. The treatment apparatus of claim 4, wherein flow velocity inside the reactor is controlled to be higher than minimum fluidization velocity of UO₂F₂ powder.

8. The treatment apparatus of claim 4, wherein flow velocity inside the solid/gas separator is controlled to be lower than minimum fluidization velocity of UO₂F₂ powder.

## Patentansprüche

1. Verfahren zur Behandlung einer UF₆-Restmenge, wobei das Behandlungsverfahren Folgendes umfasst:
(1) Verdampfen der UF₆-Restmenge;
(2) Herstellen einer UO₂F₂-Feststoffphase mit Hilfe von UF₆-Gas, das in Schritt (1) verdampft wurde;
(3) Abscheiden der UO₂F₂-Feststoffphase und von Nebenproduktgas voneinander; und
(4) Abscheiden von Wasserstofffluorid von dem Nebenproduktgas in Schritt (4).

2. Behandlungsverfahren nach Anspruch 1, wobei das Verdampfen der UF₆-Restmenge in Schritt (1) ferner das Zuführen eines inerten Gases zum Verdampfen des UF₆ umfasst und die Temperatur auf nicht weniger als einen Dreiphasenpunkt des UF₆ erhöht.

3. Behandlungsverfahren nach Anspruch 1, wobei das Abscheiden von Wasserstofffluorid von dem Nebenproduktgas in Schritt (4) ferner das Abscheiden einer wässrigen Lösung des Wasserstofffluorids in einem unteren Abschnitt eines Flüssigkeit-Gas-Abscheiders (74) umfasst.

4. Vorrichtung zur Behandlung einer UF₆-Restmenge, wobei die Behandlungsvorrichtung Folgendes umfasst:
einen Verdampfer (71) zum Verdampfen der UF₆-Restmenge,
einen Reaktor (72), der mit dem Verdampfer verbunden ist, um die UO₂F₂-Feststoffphase mit Hilfe des in dem Verdampfer erzeugten UF₆-Gases herzustellen,
einen Feststoff-Gas-Abscheider (73), der mit dem Reaktor verbunden ist, um die in dem Reaktor hergestellte UO₂F₂-Feststoffphase von dem Nebenproduktgas abzuscheiden,
einen Wärmetauscher (741), der mit dem Feststoff-Gas-Abscheider verbunden ist, um das Hindurchströmen des von dem Feststoff-Gas-Abscheider zugeführten Nebenproduktgases und dessen Kondensieren zu einer Flüssigkeit zu ermöglichen, und
einen Flüssigkeit-Gas-Abscheider (74), der dafür gestaltet ist, die in dem Wärmetauscher kondensierte Wasserstofffluoridflüssigkeit von dem Gas abzuscheiden,
ferner ein Gebläse (742) umfassend, das bereitgestellt ist, indem es mit einer Seite über dem Flüssigkeit-Gas-Abscheider verbunden ist, und das dafür gestaltet ist, mindestens einen Teil des in dem Flüssigkeit-Gas-Abscheider erzeugten Gases abzulassen.

5. Behandlungsvorrichtung nach Anspruch 4, ferner mindestens einen Gasphasenverteiler (723A, 723B) umfassend, der im Inneren des Reaktors für das gleichförmige Zuführen des Gases bereitgestellt ist.

6. Behandlungsvorrichtung nach Anspruch 4, wobei mindestens eines von einem inerten Gas und Heißdampf zugeführt wird, um die UO₂F₂-Feststoffphase in dem Reaktor herzustellen.

7. Behandlungsvorrichtung nach Anspruch 4, wobei die Strömungsgeschwindigkeit in dem Reaktor derart gesteuert wird, dass sie höher als eine Fluidisierungsmindestgeschwindigkeit von UO₂F₂-Pulver ist.

8. Behandlungsvorrichtung nach Anspruch 4, wobei die Strömungsgeschwindigkeit im Inneren des Flüssigkeit-Gas-Abscheiders derart gesteuert wird, dass sie geringer als die Fluidisierungsmindestgeschwindigkeit von UO₂F₂-Pulver ist.

## Revendications

1. Procédé de traitement pour un pied de cuve d'UF₆, le procédé de traitement comprenant :
(1) la vaporisation du pied de cuve d'UF₆ ;
(2) la fabrication d'UO₂F₂ en phase solide en utilisant le gaz d'UF₆ vaporisé à l'étape (1) ;
(3) la séparation de l'UO₂F₂ en phase solide et du sous-produit gazeux l'un de l'autre ; et
(4) la séparation du fluorure d'hydrogène du sous-produit gazeux à l'étape (4).

2. Procédé de traitement selon la revendication 1, dans lequel la vaporisation du pied de cuve d'UF₆ à l'étape (1) comprend en outre l'apport d'un gaz inerte pour vaporiser l'UF₆ et élever la température à pas moins d'un point triple de l'UF₆.

3. Procédé de traitement selon la revendication 1, dans lequel la séparation du fluorure d'hydrogène du sous-produit gazeux à l'étape (4) comprend en outre la séparation d'une solution aqueuse de fluorure d'hydrogène au niveau d'une portion inférieure d'un séparateur liquide/gaz (74).

4. Appareil de traitement pour un pied de cuve d'UF₆, l'appareil de traitement comprenant :
un vaporisateur (71) pour la vaporisation du pied de cuve d'UF₆ ;
un réacteur (72) relié au vaporisateur de façon à fabriquer l'UO₂F₂ en phase solide en utilisant le gaz d'UF₆ généré au niveau du vaporisateur ;
un séparateur solide/gaz (73) relié au réacteur de façon à séparer l'UO₂F₂ en phase solide, fabriqué dans le réacteur, du sous-produit gazeux ;
un échangeur de chaleur (741) relié au séparateur solide/gaz de façon à permettre au sous-produit gazeux, apporté à partir du séparateur solide/gaz, de passer à travers celui-ci et d'être condensé en un liquide ; et
un séparateur liquide/gaz (74) configuré pour séparer le fluorure d'hydrogène liquide, condensé au niveau de l'échangeur de chaleur, du gaz,
comprenant en outre un ventilateur (742) fourni en étant relié à un côté au-dessus du séparateur liquide/gaz et configuré pour évacuer au moins une portion du gaz généré à l'intérieur du séparateur liquide/gaz.

5. Appareil de traitement selon la revendication 4, comprenant en outre au moins un distributeur de phase gazeuse (723A, 723B) fourni au niveau de l'intérieur du réacteur pour apporter uniformément le gaz.

6. Appareil de traitement selon la revendication 4, dans lequel, au moins l'un d'un gaz inerte et d'une vapeur surchauffée est apporté afin de fabriquer l'UO₂F₂ en phase solide dans le réacteur.

7. Appareil de traitement selon la revendication 4, dans lequel la vitesse d'écoulement à l'intérieur du réacteur est commandée pour être supérieure à la vitesse de fluidisation minimale d'une poudre d'UO₂F₂.

8. Appareil de traitement selon la revendication 4, dans lequel la vitesse d'écoulement à l'intérieur du séparateur solide/gaz est commandée pour être inférieure à la vitesse de fluidisation minimale d'une poudre d'UO₂F₂.
